**Europäisches Patentamt**

**European Patent Office**

**Office européen des brevets**

(19)

(11) Publication number: **0 042 283**
**A1**

# EUROPEAN PATENT APPLICATION

(12)

(21) Application number: **81302670.5**

(22) Date of filing: **15.06.81**

(51) Int. Cl.³: **F 16 G 13/14,** B 21 L 3/00

(30) Priority: **16.06.80 US 160129**

(43) Date of publication of application: **23.12.81**
**Bulletin 81/51**

(84) Designated Contracting States: **AT BE CH DE FR GB IT LI LU NL SE**

(71) Applicant: **DOMINION CHAIN INC, 617 Douro Street, Stratford Ontario (CA)**

(72) Inventor: **Smith, John M., 54 Park Lane Drive, Stratford Ontario (CA)**

(74) Representative: **Topps, Ronald et al, D. Young & Co 10 Staple Inn, London WC1V 7RD (GB)**

(54) **A chain link.**

(57) In a welded metal chain each link (10) is of uniform, sub-
stantially trapezoidal cross-section throughout its length, the
cross-section tapering outwardly from an inside bearing sur-
face (13) to an outside surface (14) of the link (10). In this way
the distribution of metal is matched to the distribution of stres-
ses in the link (10), under load, thereby improving the strength
to weight ratio of the chain.

EP 0 042 283 A1

ACTORUM AG

0 0 4 2 2 8 3

1

## A CHAIN LINK

This invention relates to a chain link, particularly a welded metal chain link and to a welded metal chain construction.

In a welded metal chain each link is made from a metal bar which is forged to form two facing U-portions and then welded, the link being interlinked with a preceding link of the chain. Conventionally each link is of circular cross-section throughout its length. In the case of a chain under load, however, each link is subjected to compressive and tensile stresses which are unequally distributed throughout the link, setting up bending stresses which are a maximum at the arcuate end portions of the link where the compressive stresses on the inner side of the neutral axis are greatest and the tensile stresses on the outer side of the neutral axis are least. Thus, if the cross-sectional distribution of metal of the link is symmetrical about the neutral axis, as is the case with a link formed from round section stock, a considerable amount of metal remains but lightly loaded when the chain is subjected to maximum load. Therefore, the strength to weight ratio of a chain link formed from round section stock is less than optimal.

It has previously been proposed to make welded metal chains for special purposes using stock of non-circular cross-section, examples of such chains being described in U.S. Patent No. 878,989 to Henry B. Newhall, dated February 11, 1908, U.S. Patent No. 2,103,972 to Leonard T. Harris, dated December 28, 1937, and U.S. Patent No. 4,110,971 to Peter Bruce, dated September 5, 1978. In these constructions, however, there is no attempt to improve the strength to weight ratio of a link by matching the cross-sectional distribution of metal to the stress distribution. U.S. Patent No. 3,453,823 to Peter Mundt, dated July 8, 1969 and U.S. Patent No. 3,662,539 to Peter Florjancic, dated May 16, 1972 also disclose chain links of non-circular cross-section, but are specifically concerned with the manufacture of plastics chain links formed by injection moulding and are not applicable to the manufacture of welded metal chains in which strength to weight ratio is a major consideration.

The present invention is specifically concerned with the problem of constructing a welded metal chain so as to reduce the amount of metal required for a given strength. The invention is based on the concept of designing each link so as to match the distribution of metal more nearly to the distribution of stresses under load.

A welded metal chain according to one aspect of the invention comprises a plurality of interconnected links, and is characterised in that each link consisting of a closed member of uniform cross-section throughout its length, said cross-section tapering outwardly from an inside bearing surface to a radiused outer surface of the link.

According to another aspect of the invention there is provided a welded metal chain comprising a plurality of interconnected similar links, each link consisting of a closed member forming an elongated loop and being of uniform trapezoidal cross-section throughout its length, the member providing an outside surface and an arcuate inside surface and tapering in thickness outwardly from said inside surface to said outside surface.

An embodiment of the invention will now be described, by way of an example, with reference to the accompanying drawings, in which:-

Figure 1 is a side elevation showing part of a welded steel chain in accordance with the invention, and

Figure 2 is a part-sectional perspective view, somewhat enlarged of one of the links.

Referring to the drawings, the chain comprises a plurality of interconnected similar links 10. Each link 10 consists of a steel bar which is of uniform cross-section throughout its length and formed into a closed loop, the link being welded in the conventional manner. As shown, each link 10 has a pair of straight leg portions 11 and a pair of arcuate end portions 12, the inside surfaces 13 of the end portions 12 constituting arcuate bearing surfaces, the curvature of the bearing surfaces corresponding to the curvature of the end portions 12 in the direction orthogonal thereto.

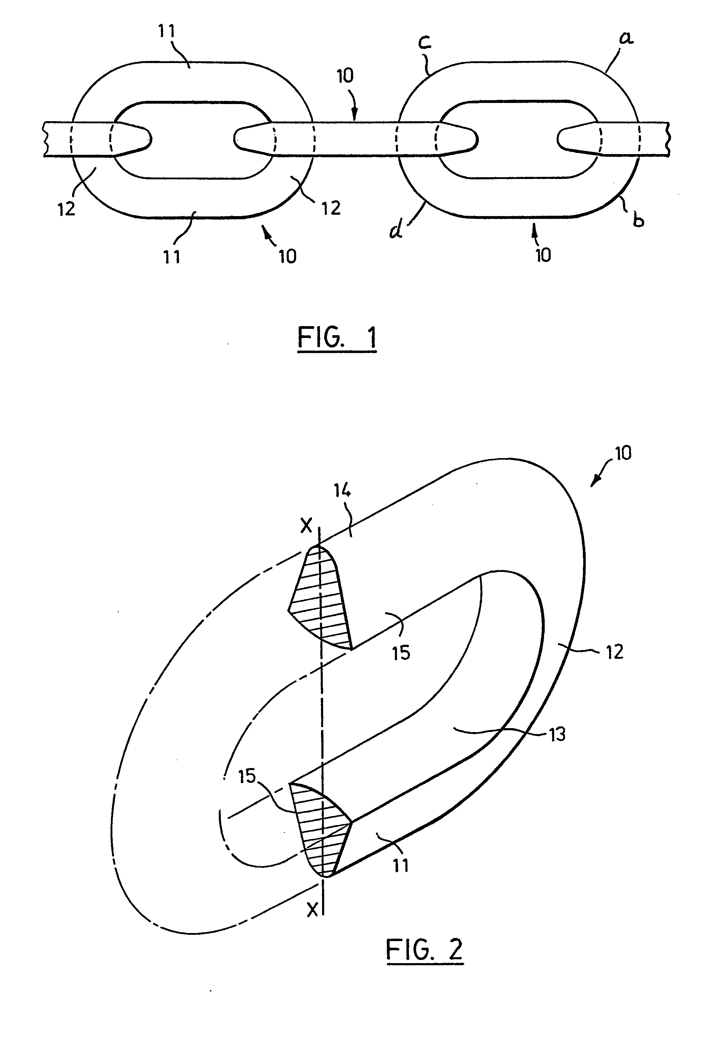

The chain link 10 of the present invention is characterised by the fact that it is of trapezoidal cross-section, the cross-section being defined by the arcuate inside bearing surface 13, an arcuate outside surface 14 of greater curvature (i.e. smaller radius of curvature) than the inside bearing surface 13, and a pair of side surfaces 15 which taper linearly from the inside bearing surface 13 to the radiused outer surface 14. With this construction the distribution of metal in the link 10 is more nearly matched to the stress distribution under load than in a conventional link, that is to say, the thickness of metal increases towards the inside bearing surface 13, so that the strength to weight ratio of the link 10 is improved. In the preferred embodiment shown each link 10 is symmetrical with respect to a medial plane intersecting the inside and outside surfaces 13 and 14, this plane being denoted by line X-X in Figure 2.

Since the inside portions of the link 10, that is the portions between the inside bearing surface 13 and the neutral axis, are in compression at the arcuate end portions 12 and in tension at the straight leg portions 11, it is evident that there are four regions of the loop at which the bending moments are zero when the chain is under load. These regions, denoted at a, b, c, and d in Figure 1, are determined by the configuration of the link at the end portions as well as by the cross-sectional configuration and are suitable positions for making the welds. Thus, referring to Figure 1, the formed link 10 may be welded advantageously at any of the positions a, b, c and d.

4

## CLAIMS

1. A welded metal chain comprising a plurality of interconnected links, each link consisting of a closed member of uniform cross-section throughout its length, characterised in that the cross-section of each closed member tapers outwardly from an inside bearing surface (13) to a radiused outer surface (14) of the link (10).

2. A welded metal chain comprising a plurality of interconnected links, each link consisting of a closed member of uniform cross-section throughout its length, characterised in that the cross-section of each closed member is defined by an arcuate inside portion (13), an arcuate outside portion (14) of greater curvature than said inside portion (13), and a pair of side portions (15) tapering from said inside portion (13) to said outside portion (14).

3. A welded metal chain according to claim 2, further characterised in that each link (10) is symmetrical with respect to a medial plane (X-X) intersecting said inside and outside arcuate portions (13, 14).

4. A welded metal chain according to claim 2 or claim 3, further characterised in that each link (10) is an elongated loop having a pair of straight leg portions (11) and a pair of arcuate end portions (12), the inside surfaces (13) of said end portions (12) constituting bearing surfaces.

5. A welded metal chain according to any of claims 2 to 4, further characterised in that said side portions (15) of the cross-section are substantially linear.

6. A welded metal chain comprising a plurality of interconnected similar links, each link consisting of a closed member forming an elongated loop, characterised in that the closed member is of uniform substantially trapezoidal cross-section throughout its length, the member providing an outside surface (14) and an arcuate inside surface (13) and tapering in thickness outwardly from said inside surface (13) to said outside surface (14).

7.	A welded metal chain according to any preceding claim, further characterised in that each link (10) is welded at a position at which the bending moment under load is zero.

1/1

0042283

FIG. 1

FIG. 2

0042283

**European Patent Office**

**EUROPEAN SEARCH REPORT**

Application number

EP 81 30 2670

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| | GB - A - 1 055 703 (ESCO CORPO-RATION) <br>   * Figures 16-20; page 3, line 123 - page 4, line 3; page 4, lines 24-29 * <br> -- | 1-6 | F 16 G 13/14 <br> B 21 L 3/00 |
| | DE - C - 308 261 (HLASTEC, BENDL., FEINER) <br>   * Figures 1,2,4 * <br> -- | 1,2 | |
| | US - A - 2 507 025 (A.W. LEMMON) <br>   * Figures 1-4; column 4, lines 3-58 * <br> -- | 1,3-5 | TECHNICAL FIELDS SEARCHED (Int. Cl.3) <br><br> B 21 L <br> B 63 B <br> B 66 C <br> F 16 B <br> F 16 G |
| | FR - A - 2 265 658 (ARCHER) <br>   * The whole document * <br> -- | 1,3-6 | |
| D | US - A - 3 453 823 (P. MUNDT) <br>   * The whole document * <br> -- | 1-3 | |
| D | US - A - 2 103 972 (L.T. HARRIS) <br>   * The whole document * <br> -- | 3,5 | |
| | US - A - 1 658 924 (A. AND F. HELLE) <br>   * The whole document * <br> -- | 7 | |
| A | GB - A - 4601 A.D. 1910 (D. WILLIAMS) <br>                     ./. | 1,2,6 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-08-1981 | JAIK |

EPO Form 1503.1  06.78

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | * Figure 1 * | | |
| | -- | | |
| A | US - A - 1 753 326 (J.C. YINGLING) | 1,2,6 | |
| | * Figure 3 * | | |
| | ---- | | |
| | | | TECHNICAL FIELDS SEARCHED (Int. Cl ³) |